# EUROPEAN PATENT APPLICATION

(11) **EP 4 831 736 A1**
(43) Date of publication of application: **28.10.2026**
(21) Application number: 26152198.3
(22) Date of filing: 15.01.2026
(51) Int. Cl.: G03B 21/53

(54) **FOCUS CONTROL METHOD FOR PROJECTION DEVICE AND PROJECTION DEVICE**

(30) Priority: 23.04.2025 CN 202510522075
(71) Applicant: Anker Innovations Technology Co., Ltd., Changsha, Hunan 410221 (CN)
(72) Inventor: NIE, Qingchun, Changsha City, 410221 (CN); WU, Dongjiang, Changsha City, 410221 (CN)
(74) Representative: De Arpe Tejero, Manuel

(57) **Abstract**

The present application relates to a focus control method for a projection device and a projection device. The method includes: obtaining, in response to a focus control instruction, a target throw ratio of the projection device; determining a target focus position corresponding to the target throw ratio in a preset focus mapping relationship based on the target throw ratio, the focus mapping relationship being configured to represent a corresponding relationship between throw ratios and focus positions; performing focusing on the projection device based on the target focus position, and controlling a focus lens group of the projection device to reach the target focus position.

## Description

### TECHNICAL FIELD

The present disclosure relates to the technical field of projections, and in particular to a focus control method for a projection device and a projection device.

### BACKGROUND

A projection device, also known as a projector, may be an optical instrument that may project an image or a video onto a screen for display. With the development of technology, projection devices may find increasingly widespread applications in people's daily production, life, and study.

During the use of the projection device, focusing may usually be required to sharpen the projected image. In the related art, manual focusing by a user may be required, or focusing may be performed with the aid of a specific projected image.

However, in the related art, a focusing process of the projection device may be cumbersome and time-consuming, thereby reducing focusing efficiency.

### SUMMARY

Based on this, embodiments of the present disclosure may provide a focus control method for a projection device and a projection device to address the above technical problems.

In a first aspect, the embodiments of the present disclosure may provide a focus control method for a projection device. The method may include: obtaining, in response to a focus control instruction, a target throw ratio of the projection device; determining a target focus position corresponding to the target throw ratio in a preset focus mapping relationship based on the target throw ratio, the focus mapping relationship being configured to represent a corresponding relationship between throw ratios and focus positions; performing focusing on the projection device based on the target focus position, and controlling a focus lens group of the projection device to reach the target focus position.

In a second aspect, the embodiments of the present disclosure may provide a projection device. The projection device may include an optical engine, a distance sensor, a focus motor, and a focus magnetic encoder. The optical engine may include a focus lens group configured to perform focusing on a projected image. The distance sensor may be configured to detect a projection distance. The focus magnetic encoder may be connected to the focus lens group and configured to detect a position of the focus lens group. The optical engine may further include a memory and a processor. The memory may be configured to store a computer program. The processor may be configured to execute the computer program to implement any one of operations of the method mentioned above.

In the above focus control method for the projection device and the projection device, the target throw ratio of the projection device may be obtained in response to the focus control instruction. The target focus position corresponding to the target throw ratio may be determined in the preset focus mapping relationship based on the target throw ratio. The focus mapping relationship may be configured to represent the corresponding relationship between throw ratios and focus positions. Focusing on the projection device may be performed based on the target focus position, and the focus lens group of the projection device may be controlled to reach the target focus position. In the above method, the target focus position corresponding to the target throw ratio may be determined from the preset focus mapping relationship based on the target throw ratio, without manual focusing by a user or focusing assisted by a specific projected image. Instead, the target focus position corresponding to the target throw ratio may be determined by querying the preset focus mapping relationship to perform focusing, thereby improving the focusing efficiency of the projection device.

### BRIEF DESCRIPTION OF THE DRAWINGS

FIG. 1 is a schematic internal structure view of a projection device according to some embodiments of the present disclosure.
FIG. 2 is a schematic flowchart of a focus control method for a projection device according to some embodiments of the present disclosure.
FIG. 3 is a schematic view of a corresponding relationship in a focus mapping relationship based on some embodiments of the present disclosure.
FIG. 4 is a schematic flowchart of an operation of obtaining a target throw ratio of a projection device according to some embodiments of the present disclosure.
FIG. 5 is a schematic flowchart of an operation of controlling a projection device to reach a target focus position according to some embodiments of the present disclosure.
FIG. 6 is another schematic flowchart of an operation of controlling a projection device to reach a target focus position according to some embodiments of the present disclosure.
FIG. 7 is further another schematic flowchart of an operation of controlling a projection device to reach a target focus position according to some embodiments of the present disclosure.
FIG. 8 is a schematic flowchart of an operation of determining a target focus position corresponding to a target throw ratio according to some embodiments of the present disclosure.
FIG. 9 is another schematic flowchart of an operation of determining a target focus position according to some embodiments of the present disclosure.
FIG. 10 is a schematic flowchart of an operation of obtaining a plurality of frames of projected images at different positions according to some embodiments of the present disclosure.
FIG. 11 is still another schematic flowchart of an operation of controlling a projection device to reach a target focus position according to some embodiments of the present disclosure.
FIG. 12 is another schematic flowchart of a focus control method for a projection device according to some embodiments of the present disclosure.
FIG. 13 is a schematic structure view of a focus control apparatus of a projection device according to some embodiments of the present disclosure.

### DETAILED DESCRIPTION

In order to make the purposes, technical solutions, and advantages of the embodiments of the present disclosure clearer, the present disclosure may be further described in detail below in conjunction with the accompanying drawings and the embodiments. It should be understood that the embodiments described herein may be used only to explain the present disclosure and may not be used to limit the present disclosure.

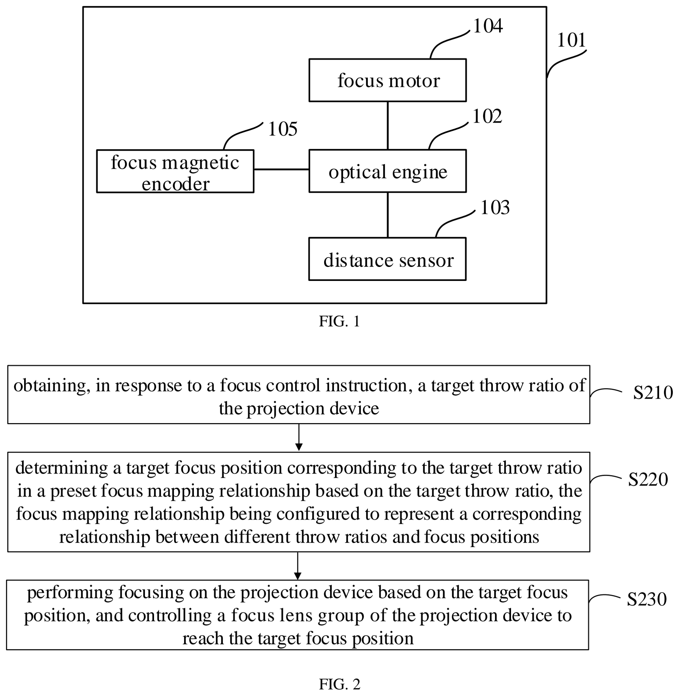

A focus control method for a projection device provided by the embodiments of the present disclosure may be applied to a projection device as shown in FIG. 1. The projection device 101 may include an optical engine 102, a distance sensor 103, a focus motor 104, and a focus magnetic encoder 105. The optical engine 102 may include a focus lens group configured to perform focusing on a projected image. The distance sensor 103 may be configured to detect a projection distance of the projection device 101. The focus magnetic encoder 105 may be connected to the focus lens group and may be configured to detect a position of the focus lens group. The optical engine 102 may further include a memory and a processor. The memory may be configured to store a computer program. The processor may be configured to execute the computer program to implement the focus control method for the projection device.

Those skilled in the art may understand that a structure shown in FIG. 1 may be only a block diagram of a partial structure related to the solutions of the present disclosure, and may not constitute a limitation on the projection device to which the solutions of the present disclosure is applied. The projection device may include more or fewer components than those shown in the drawings, or combine some components, or have different component arrangements.

In some embodiments, as shown in FIG. 2, the focus control method for the projection device may be provided. The method may be described by taking the application of the method to the projection device shown in FIG. 1 as an example, and may include operations executed by the following blocks.

At block S210, in response to a focus control instruction, a target throw ratio of the projection device may be obtained.

A throw ratio (TR) may be a ratio of a projected image width to a projection distance. That is, the TR may equal to the projection distance divided by the projected image width. A size of an image projected by the projection device at different distances may be determined based on the throw ratio.

It may be understood that the projection distance may be a straight-line distance between the focus lens group in the projection device and a projection screen or a projection surface. The projection distance may be determined by an infrared sensor or other distance measuring sensors. A manner of determining the projection distance may not be limited in the embodiments of the present disclosure.

In some embodiments, the projection device may obtain the target throw ratio of the projection device based on the focus control instruction in a case where the projection device receives the focus control instruction. The throw ratio of the projection device in the embodiments of the present disclosure may be variable. Based on this, the target throw ratio may be a current throw ratio of the projection device or an adjusted throw ratio.

In some embodiments, the focus control instruction may be sent by an external device or apparatus. For example, the focus control instruction may be sent by a terminal, such as a mobile phone or a remote controller, that has established a communication connection with the projection device. The focus control instruction may also be triggered by a user's operation on the projection device. The focus control instruction may further be triggered by the projection device, such as during an auto-focusing process.

In some embodiments, the projection device may determine whether the projection distance has changed via a distance measuring sensor, triggering the focus control instruction in a case where the projection distance changes. The projection device may also capture a projected image via an image sensor and determine the clarity of the projected image by using a built-in image processing algorithm, triggering the focus control instruction in a case where the clarity fails to meet a preset requirement.

In some embodiments, after determining the target throw ratio, performing focusing on the projection device may involve adjusting a position of the focus lens group in the projection device based on the target throw ratio, so as to achieve a change in a focal length, ensuring that the clarity of the projected image at the projection distance meets the preset requirement.

At block S220, a target focus position corresponding to the target throw ratio may be determined in a preset focus mapping relationship based on the target throw ratio. The focus mapping relationship may be configured to represent a corresponding relationship between throw ratios and focus positions.

In some embodiments, the focus mapping relationship may be pre-stored in a storage medium of the projection device. The focus mapping relationship may store various throw ratios and a focus position corresponding to each throw ratio. The focus position corresponding to the throw ratio may be a focus position at which the clarity of the projected image meets the preset requirement at the throw ratio. Therefore, the position of the focus lens group in the projection device may be adjusted based on the focus position corresponding to the throw ratio in the focus mapping relationship. In this way, the projection device may generate a projected image whose clarity meets the preset requirement at the corresponding projection ratio.

In some embodiments, the corresponding relationship between the throw ratio and the focus position may be one-to-many. That is, one throw ratio may correspond to multiple focus positions. Since the throw ratio is associated with the projection distance and the projected image width, different projection distances at the same throw ratio may correspond to different focus positions. Therefore, the focus mapping relationship may further incorporate the projection distance, and a corresponding focus position may be determined based on the throw ratio and the projection distance.

In some embodiments, the projection device may query the focus mapping relationship based on the target throw ratio and a current projection distance of the projection device, so as to determine a focus position corresponding to the target throw ratio and the current projection distance as the target focus position.

The current projection distance of the projection device may be a straight-line distance between the focus lens group of the projection device and the projection screen or the projection surface.

In some embodiments, the current projection distance may be obtained via the distance measuring sensor. The distance measuring sensor may include a time of flight (TOF) sensor or other sensors with a distance measuring function, such as a radar. The TOF sensor may perform distance measurement by measuring a time required for light or other signals to be transmitted and received. The type of the distance measuring sensor may not be limited in the embodiments of the present disclosure.

In some embodiments, the focus position may be an object distance.

The object distance may be a distance between an imaging element in the projection device and an optical center of the focus lens group. The imaging element may include a digital micromirror device (DMD), a liquid crystal display (LCD), or other imaging elements.

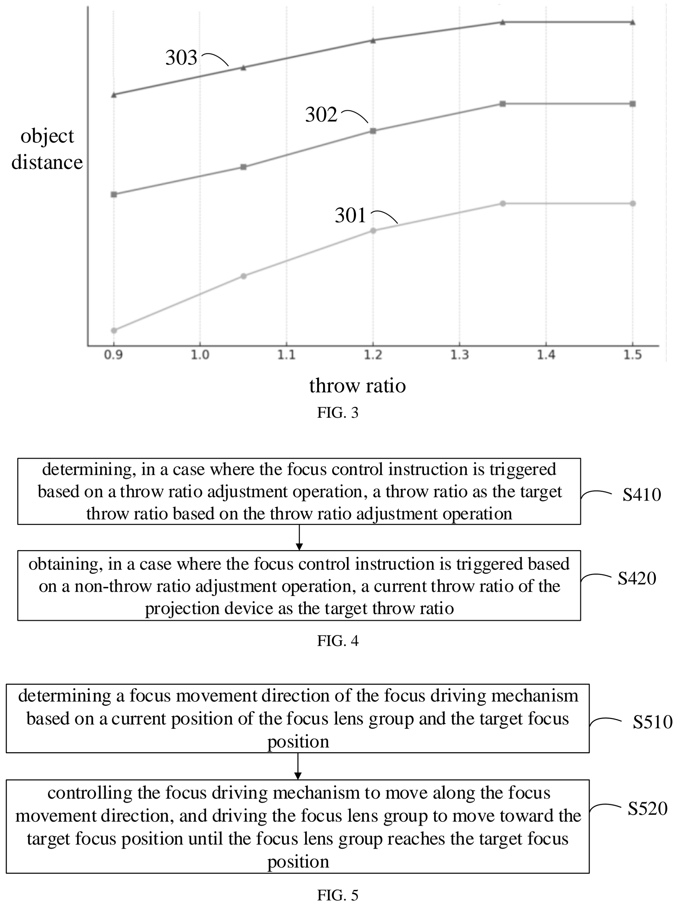

In some embodiments, as shown in FIG. 3, corresponding relationships among throw ratios, projection distances, and focus positions in the focus mapping relationship may be shown. As shown in FIG. 3, an abscissa may be the throw ratio, an ordinate may be the object distance, and a line segment 301 to a line segment 303 may respectively represent different projection distances. It may be known from FIG. 3 that after determining the projection distance and the throw ratio, a corresponding object distance may be determined based on the focus mapping relationship.

In some embodiments, it may be known from FIG. 3 that at the same projection distance, the throw ratio and the object distance may change linearly. That is, a change of the object distance and a change of the throw ratio may present an approximately linear relationship. Correspondingly, each increase (or decrease) of a unit of the throw ratio may cause an increase (or decrease) of a fixed distance in the object distance between the imaging element and the focus lens group. In a case where the focus motor moves, there may be no motor idle stroke phenomenon. The focus motor may be controlled to rotate in the same direction to drive the focus lens group to move to the target focus position.

The motor idle stroke phenomenon may be that in a case where a motor moves in the same direction, the motor may accurately drive the focus lens group to move, but in a case where the motor moves in a reverse direction, a portion of a stroke may fail to actually drive the focus lens group to move due to a structural gap error.

At block S230, focusing on the projection device may be performed based on the target focus position, and the focus lens group of the projection device may be controlled to reach the target focus position.

In some embodiments, the projection device may perform focusing by adjusting the position of the focus lens group in the projection device to correspond to the target focus position based on the target focus position.

The focus lens group may be configured to change the focal length of the projection device, so as to achieve focusing for clarifying the projected image. The target throw ratio may be a desired throw ratio to be achieved by the projection device. The focus position may be configured to represent the position of the focus lens group.

In some embodiments, the projection device may read a preset focus mapping relationship between the throw ratio and the focus position to determine the target focus position corresponding to the target throw ratio, and control the focus lens group to move to the target focus position.

In the embodiments of the present disclosure, the target throw ratio of the projection device may be obtained in response to the focus control instruction. The target focus position corresponding to the target throw ratio may be determined in the preset focus mapping relationship based on the target throw ratio. The focus mapping relationship may be configured to represent the corresponding relationship between throw ratios and focus positions. Focusing on the projection device may be performed based on the target focus position, and the projection device may be controlled to reach the target focus position. In the above method, the target focus position corresponding to the target throw ratio may be determined from the preset focus mapping relationship based on the target throw ratio, so that focusing on the projection device may be performed based on the target focus position, without manual focusing by a user or focusing assisted by a specific projected image, thereby improving the focusing efficiency of the projection device.

The focus mapping relationship may be constructed in various manners. In some embodiments, the focus mapping relationship may be obtained based on simulation of an optical simulation model of the projection device, which may include operations executed by the following blocks.

At block S11, a plurality of simulation parameters of the projection device may be input into the optical simulation model of the projection device to perform imaging simulation, and a corresponding relationship between the throw ratio and a target object distance of the projection device at different projection distances may be obtained. The target object distance may represent an object distance of the projection device at which the projected image meets a quality requirement.

In some embodiments, the simulation parameters of the projection device may include the throw ratios, object distances, and the projection distances. Throw ratios, object distances, and projection distances may be respectively input into the optical simulation model. Imaging simulation may be performed via a preset simulation method. The imaging quality of the projected image at different throw ratios, object distances, and projection distances may be determined via a contrast detection algorithm.

In some embodiments, the optical simulation model may accurately describe parameters such as a curvature, a thickness, a material, and a lens spacing of each lens element in a lens assembly of the projection device. The preset simulation method may include methods such as ray tracing. The imaging quality may be the clarity of the projected image. The projected image meeting the quality requirement may mean that the clarity of the projected image meets the preset requirement. The contrast detection algorithm may include a gradient-based algorithm, a histogram-based algorithm, a wavelet transform-based algorithm, etc. The imaging quality of the projected image may also be adjusted through a transfer function, which may not be limited in the present disclosure.

In some embodiments, different projection distances may be obtained. After obtaining one projection distance, the throw ratio and the object distance may be continuously adjusted. The target object distance corresponding to different throw ratios at the projection distance may be determined based on the imaging quality.

At block S12, a corresponding relationship between the throw ratio and a step count of the focus motor or magnetic encoder data at different projection distances may be constructed as the focus mapping relationship based on a corresponding relationship between the object distance of the projection device and the step count of the focus motor or the magnetic encoder data, and the corresponding relationship between the throw ratio and the target object distance at different projection distances.

In some embodiments, a corresponding relationship between the object distance of the projection device and the step count of the focus motor or a corresponding relationship between the object distance of the projection device and the magnetic encoder data may be determined via a pre-established mathematical model or a mapping table. After the object distance of the projection device is determined, a corresponding step count of the focus motor or corresponding magnetic encoder data may be determined based on the mathematical model or the mapping table.

In some embodiments, at different projection distances, by combining the one-to-one corresponding relationship between the throw ratio and the target object distance, and the one-to-one corresponding relationship between the object distance of the projection device and the step count of the focus motor or the one-to-one corresponding relationship between the object distance of the projection device and the magnetic encoder data, with the target object distance as an intermediate bridge, the corresponding relationship between the throw ratio and the step count of the focus motor or the corresponding relationship between the throw ratio and the magnetic encoder data at different projection distances may be determined, thereby determining the focus mapping relationship.

In some embodiments, the focus mapping relationship may include a corresponding relationship between throw ratios and confocal parameters at different projection distances. The focus position may include the target object distance, the step count of the focus motor, and the magnetic encoder data.

The focus mapping relationship may also be obtained based on factory calibration, which may include operations executed by the following blocks.

At block S21, at each projection distance among multiple projection distances, an image quality curve of a projection image quality varying within a stroke range of the focus motor of the projection device at different throw ratios may be obtained.

In some embodiments, for each projection distance, one throw ratio of the projection device may be first obtained, then the focus motor may be adjusted to rotate. A projection image quality corresponding to a current step count of the focus motor may be obtained each time the focus motor rotates once. By continuously adjusting the step count of the focus motor, an image quality curve of the projection image quality varying within the stroke range of the focus motor at a current throw ratio may be obtained.

In some embodiments, in a case where the projection distance is 2 meters and the throw ratio is 0.9, the focus motor may be adjusted step by step from a leftmost end of a structure to a rightmost end of the structure, or the focus motor may be adjusted step by step from the rightmost end of the structure to the leftmost end of the structure, and the image quality curve of the projection image quality varying within the stroke range of the focus motor may be obtained.

In some embodiments, the throw ratio of the projection device may be adjusted at one projection distance, and then the above operations may be repeated to obtain multiple image quality curves at a fixed projection distance and different throw ratios. In some embodiments, taking m projection distances and n throw ratios as an example, m×n image quality curves may be obtained. An abscissa of the image quality curve may be the step count of the focus motor, and an ordinate of the image quality curve may be the clarity of the projected image.

At block S22, a step count of the focus motor that meets the quality requirement may be determined based on the image quality curve.

In some embodiments, a peak point of the image quality curve may be determined. An abscissa position corresponding to the peak point may be the step count of the focus motor that meets the quality requirement. In some embodiments, values of the image quality curve may be compared to determine a maximum value point. The step count of the focus motor that meets the quality requirement may be determined based on an abscissa position corresponding to the maximum value point. Alternatively, in a case where there are multiple local peaks in the image quality curve, the step count of the focus motor that meets the quality requirement may be determined based on an abscissa position corresponding to a largest peak by comparing magnitudes of the local peaks.

At block S23, the focus mapping relationship may be constructed based on each step count of the focus motor corresponding to the projection distance and the throw ratio.

In some embodiments, for each image quality curve, a group of projection distance, throw ratio, and step count of the focus motor that meets the quality requirement corresponding to the image quality curve may be determined. The focus mapping relationship may be determined based on multiple groups of the projection distance, throw ratio, and step count of the focus motor.

In some embodiments, after determining the group of projection distance, throw ratio, and step count of the focus motor, a corresponding object distance may also be determined based on a relationship between the step count of the focus motor and the object distance.

In some embodiments, there may be an association between the step count of the focus motor and the magnetic encoder data. Therefore, for each projection distance, an image quality curve of the projection image quality varying within the stroke range of the focus motor at different throw ratios may be obtained. An abscissa of the image quality curve may be the magnetic encoder data, and an ordinate of the image quality curve may be the clarity of the projected image. By executing the same operations as block S22 and block S23, multiple groups of projection distance, throw ratio, and magnetic encoder data may be determined. Therefore, the focus mapping relationship may be determined based on the multiple groups of projection distance, throw ratio, and magnetic encoder data.

In order to obtain the target throw ratio of the projection device, in some embodiments, as shown in FIG. 4, the operation of obtaining the target throw ratio of the projection device in block S210 may include operations executed by the following blocks.

At block S410, in a case where the focus control instruction is triggered based on a throw ratio adjustment operation, a throw ratio may be determined as the target throw ratio based on the throw ratio adjustment operation.

In some embodiments, the focus control instruction may be triggered in a case where the throw ratio is adjusted. In this case, the target throw ratio may be determined based on the throw ratio to be adjusted.

In some embodiments, the throw ratio adjustment operation may include at least one of adjusting the projection distance and adjusting the projected image width.

In some embodiments, in a case where the projection distance is adjusted and the projected image width remains unchanged, the throw ratio may change. In a case where the projected image width is adjusted and the projection distance remains unchanged, the throw ratio may also change. In a case where the projected image width and the projection distance are adjusted simultaneously, the throw ratio may also change.

The target throw ratio may be determined based on the adjusted projection distance and/or the adjusted projected image width.

In some embodiments, the throw ratio may be adjusted by receiving a throw ratio adjustment instruction sent by a terminal, an apparatus, or a remote controller connected to the projection device. The throw ratio adjustment instruction may include the target throw ratio.

At block S420, in a case where the focus control instruction is triggered based on a non-throw ratio adjustment operation, a current throw ratio of the projection device may be obtained as the target throw ratio.

In some embodiments, the non-throw ratio adjustment operation may be an operation that does not adjust the throw ratio.

In some embodiments, the focus control instruction triggered during the auto-focusing process may be the focus control instruction triggered based on the non-throw ratio adjustment operation. Details regarding the auto-focusing process may not be repeated in the embodiments of the present disclosure.

In some embodiments, an image clarity adjustment instruction sent by the terminal, the apparatus, or the remote controller connected to the projection device may be received. The image clarity adjustment instruction may be configured to indicate that the clarity of the current projected image does not meet the preset requirement.

In some embodiments, in a case where the focus control instruction is triggered based on the non-throw ratio adjustment operation, the current throw ratio of the projection device may function as the target throw ratio.

In the embodiments of the present disclosure, in a case where the focus control instruction is triggered based on the throw ratio adjustment operation, the throw ratio may be determined as the target throw ratio based on the throw ratio adjustment operation. In a case where the focus control instruction is triggered based on the non-throw ratio adjustment operation, the current throw ratio of the projection device may be obtained as the target throw ratio. In the above method, by distinguishing different cases of triggering the focus control instruction, the target throw ratio may be quickly determined. The target focus position corresponding to the target throw ratio may be determined by querying the preset focus mapping relationship to perform focusing, thereby improving the focusing efficiency of the projection device.

The projection device may include the focus lens group and a focus driving mechanism associated with the focus lens group. In some embodiments, as shown in FIG. 5, the operation of controlling the focus lens group of the projection device to reach the target focus position in block S230 may include operations executed by the following blocks.

At block S510, a focus movement direction of the focus driving mechanism may be determined based on a current position of the focus lens group and the target focus position.

The focus driving mechanism associated with the focus lens group may be configured to drive the focus lens group to move. In some embodiments, the focus driving mechanism associated with the focus lens group may be the focus motor. The projection device may drive the focus lens group to move by adjusting the step count of the focus motor.

In some embodiments, the projection device may determine whether the target focus position to be reached is located on a side of the current position close to a movement starting point of the focus lens group or on a side of the current position close to a movement ending point of the focus lens group based on the current position of the focus lens group, so as to determine a movement direction of the focus driving mechanism as the focus movement direction.

In some embodiments, in a case where the target focus position is located on the side of the current position close to the movement starting point, the projection device may determine that the focus movement direction is a positive movement direction, such as a clockwise movement direction of the focus motor. In a case where the target focus position is located on the side of the current position close to the movement ending point, the projection device may determine that the focus movement direction is a negative movement direction, such as a counterclockwise movement direction of the focus motor.

At block S520, the focus driving mechanism may be controlled to move along the focus movement direction, and the focus lens group may be driven to move toward the target focus position.

In some embodiments, after the focus movement direction is obtained, the projection device may control the focus driving mechanism to move along the focus movement direction. The focus lens group may be driven to move toward the target focus position by the movement of the focus driving mechanism until the focus lens group moves to the target focus position corresponding to the target throw ratio.

In the embodiments of the present disclosure, the focus movement direction of the focus driving mechanism may be determined based on the current position of the focus lens group and the target focus position. The focus driving mechanism may be controlled to move along the focus movement direction. The focus lens group may be driven to move toward the target focus position. In the above method, the focus driving mechanism may be controlled to move along the focus movement direction to drive the focus lens group to move to the target focus position, thereby improving the precision of focus control.

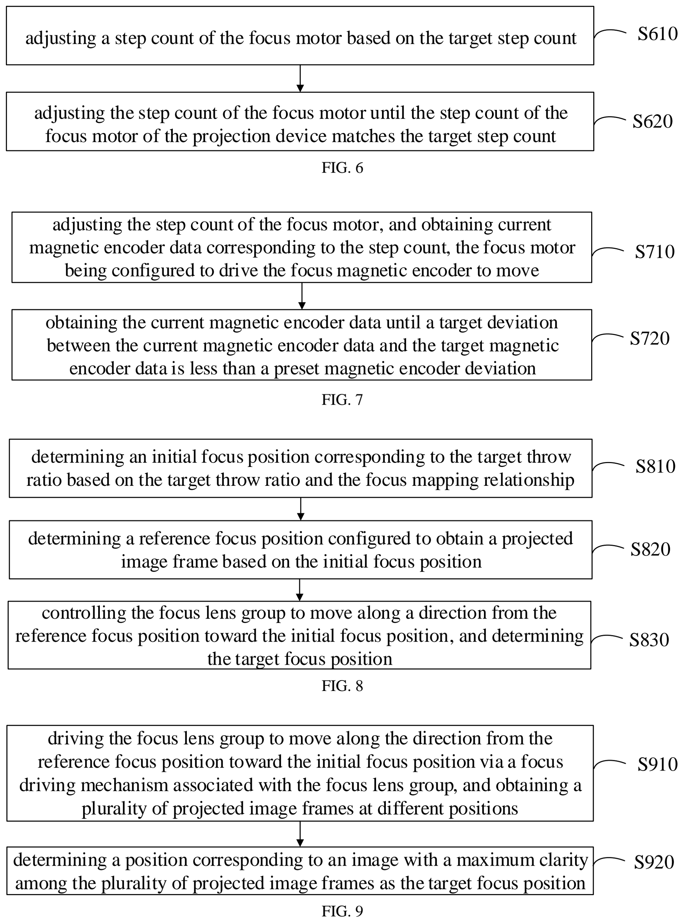

The focus driving mechanism may be the focus motor. The target focus position may be a position of the focus lens group in a case where the focus motor reaches a target step count. Based on this, in some embodiments, as shown in FIG. 6, the operation of controlling the focus lens group of the projection device to reach the target focus position in block S230 may include operations executed by the following blocks.

At block S610, the step count of the focus motor may be adjusted based on the target step count.

In some embodiments, after the target step count is determined based on the target focus position, the current step count of the focus motor and a current movement direction may be obtained. A step count difference may be determined based on the current step count of the focus motor and the target step count. A target movement direction of the focus motor may be determined based on the step count difference and the current movement direction. The step count of the focus motor may be adjusted based on the target movement direction and the step count difference.

In some embodiments, taking that the current step count of the focus motor is 4 and the target step count is 6 as an example, the step count difference may be 2 and the target movement direction may be the same as the current movement direction. The focus motor may rotate based on the current movement direction. Taking that the current step count of the focus motor is 5 and the target step count is 4 as an example, the step count difference may be -1 and the target movement direction may be opposite to the current movement direction. The focus motor may rotate based on a direction opposite to the current movement direction.

At block S620, the step count of the focus motor of the projection device may be adjusted until the step count of the focus motor matches the target step count.

In some embodiments, the adjustment of the step count of the focus motor may be achieved by converting an electrical pulse signal into a mechanical angular displacement. The focus motor may rotate by one fixed angle, that is, one step angle, each time the focus motor receives one electrical pulse signal.

In some embodiments, the current step count may be obtained each time the focus motor receives one electrical pulse signal. The current step count may be compared with the target step count. In a case where the current step count is the same as the target step count or a difference between the current step count and the target step count is less than a preset step count deviation, the focus motor may not be adjusted any more. In a case where the current step count is different from the target step count or the difference between the current step count and the target step count is greater than or equal to the preset step count deviation, the focus motor may continue to rotate.

The preset step count deviation may be as small as possible, or the preset step count deviation may be the step angle.

In the embodiments of the present disclosure, the step count of the focus motor may be adjusted based on the target step count until the step count of the focus motor of the projection device matches the target step count. In the above method, the step count of the focus motor may be adjusted, enabling the focus motor to drive the focus lens group to move, so that the object distance of the projection device may match the target object distance, thereby improving the focusing efficiency.

The projection device may further include the focus magnetic encoder connected to the focus lens group. The target focus position may be a position of the focus lens group in a case where the focus magnetic encoder reaches target magnetic encoder data. Therefore, in some embodiments, as shown in FIG. 7, the operation of controlling the focus lens group of the projection device to reach the target focus position in block S230 may include operations executed by the following blocks.

At block S710, the step count of the focus motor may be adjusted, and current magnetic encoder data corresponding to the step count may be obtained. The focus motor may be configured to drive the focus magnetic encoder to move.

The focus magnetic encoder may be a magnetic encoder associated with the focus motor. The magnetic encoder may be a sensor device that measures position, speed, or direction by using changes in a magnetic field. That is, the focus magnetic encoder may function as a magnetic field change detector. The focus magnetic encoder may be disposed in the focus lens group of the projection device.

In some embodiments, the magnetic encoder data may be position information or angle information of the focus lens group. There may be a connection between the step count of the focus motor, a movement distance of the focus lens group, and the magnetic encoder data. That is, in a case where the focus motor drives the focus lens group to move, the magnetic encoder data of the focus magnetic encoder may reflect the movement distance of the focus lens group.

In some embodiments, the focus magnetic encoder may include a magnetic encoder based on tunnel magnetoresistance (TMR) or a magnetic encoder based on Hall effect. The type of the focus magnetic encoder may not be limited in the embodiments of the present disclosure. The focus magnetic encoder may be an absolute magnetic encoder. The absolute magnetic encoder may provide a unique code at each position and may directly read current magnetic encoder data of the lens assembly.

In some embodiments, after the target magnetic encoder data is determined, initial magnetic encoder data and the current movement direction of the focus motor may be obtained. The target movement direction of the focus motor may be determined based on an initial deviation between the initial magnetic encoder data and the target magnetic encoder data. The step count of the focus motor may be adjusted based on the target movement direction and a step length of the focus motor. The current magnetic encoder data may be obtained each time the focus motor rotates by receiving one electrical pulse signal.

At block S720, the current magnetic encoder data may be obtained until a target deviation between the current magnetic encoder data and the target magnetic encoder data is less than a preset magnetic encoder deviation.

In some embodiments, after the current magnetic encoder data is determined, the target deviation between the current magnetic encoder data and the target magnetic encoder data may be determined, so as to determine whether to continue adjusting the step count of the focus motor.

In some embodiments, in a case where the target deviation between the current magnetic encoder data and the target magnetic encoder data is less than the preset magnetic encoder deviation, the step count of the focus motor may not need to be adjusted. In a case where the target deviation between the current magnetic encoder data and the target magnetic encoder data is greater than or equal to the preset magnetic encoder deviation, the operation in block S710 may need to be repeated until the target deviation is less than the preset magnetic encoder deviation.

In some embodiments, the step angle of the focus motor in the embodiments of the present disclosure may be a preset fixed angle or may change adaptively. The step angle may change adaptively based on the target deviation between the current magnetic encoder data and the target magnetic encoder data. For example, in a case where the target deviation is relatively large, the step angle may be relatively large to quickly reduce the target deviation. In a case where the target deviation is relatively small, the step angle may be correspondingly small to perform fine adjustment.

In some embodiments, the preset magnetic encoder deviation may be as close to 0 as possible. Alternatively, the preset magnetic encoder deviation may be determined based on the step angle of the focus motor.

In some embodiments, in a case where the step angle is a fixed angle, the preset magnetic encoder deviation may be the step angle. In a case where the step angle changes adaptively, the preset magnetic encoder deviation may be a minimum step angle.

In some embodiments, the focus magnetic encoder may further include an incremental magnetic encoder configured to determine a variation of magnetic encoder data. After the initial deviation is determined, a variation of magnetic encoder data after adjusting the step count of the focus motor may be determined via the incremental magnetic encoder. The step count of the focus motor may be adjusted based on the variation of magnetic encoder data and the initial deviation until a difference between the variation of magnetic encoder data and the initial deviation is less than the preset magnetic encoder deviation.

In the embodiments of the present disclosure, the step count of the focus motor may be adjusted, and the current magnetic encoder data corresponding to the step count may be obtained until the target deviation between the current magnetic encoder data and the target magnetic encoder data is less than the preset magnetic encoder deviation. In the above method, the step count of the focus motor may be adjusted, and the magnetic encoder data after adjusting the step count may be continuously obtained. Whether the focus lens group moves to the target focus position may be accurately determined based on the obtained magnetic encoder data. In a case where the target deviation between the current magnetic encoder data and the target magnetic encoder data is less than the preset magnetic encoder deviation, it may be determined that the object distance of the projection device matches the target object distance. In this way, focusing may be performed based on the target deviation between the current magnetic encoder data and the target magnetic encoder data, thereby improving the focusing efficiency.

In some embodiments, the projection device may further include a magnetic field generator and the focus magnetic encoder may be fixedly installed. The magnetic field generator may be connected to the focus lens group and may be configured to generate a magnetic field, so as to detect a position of the focus lens group.

It should be noted that, the magnetic field generator may be arranged opposite to the focus magnetic encoder. The focus motor may drive the magnetic field generator to move relative to the focus magnetic encoder, so that the focus magnetic encoder may generate corresponding magnetic encoder data.

In some embodiments, the operation of controlling the focus lens group of the projection device to reach the target focus position in block S230 may include: adjusting the step count of the focus motor, and obtaining current magnetic encoder data corresponding to the step count, the focus motor being configured to drive the magnetic field generator to move; obtaining the current magnetic encoder data until a target deviation between the current magnetic encoder data and the target magnetic encoder data is less than a preset magnetic encoder deviation.

The projection device may include the focus lens group. In some embodiments, as shown in FIG. 8, the operation of determining the target focus position corresponding to the target throw ratio in the preset focus mapping relationship based on the target throw ratio in block S220 may include operations executed by the following blocks.

At block S810, an initial focus position corresponding to the target throw ratio may be determined based on the target throw ratio and the focus mapping relationship.

A focus position corresponding to the target throw ratio in the focus mapping relationship may be the initial focus position.

In some embodiments, the projection device may read the preset focus mapping relationship between the throw ratio and the focus position to determine the initial focus position corresponding to the target throw ratio.

At block S820, a reference focus position configured to obtain a projected image frame may be determined based on the initial focus position.

The focus position may be determined through the magnetic encoder data. Magnetic encoder data of the reference focus position may be greater than magnetic encoder data of the initial focus position.

In some embodiments, after the initial focus position is determined, the projection device may determine the reference focus position based on the initial focus position and a preset spacing distance. The projection device may start to obtain the projected image frame after the focus lens group moves to the reference focus position. It may be understood that after determining that the focus lens group moves to the reference focus position, the projection device may control the focus lens group to move while obtaining the projected image frame of the focus lens group at different positions.

In some embodiments, in a case where the focus lens group moves to the reference focus position, the projection device may obtain a data deviation between current focus detection data of a focus detection assembly and candidate detection data of the reference focus position. In a case where the data deviation is less than a preset detection deviation, it may be determined that the projection device is located at the reference focus position.

In some embodiments, the preset spacing distance may be twice a motor stroke corresponding to the depth of field.

In some embodiments, the depth of field may be pre-stored in the storage medium of the projection device, may be determined through theoretical calculation based on a basic parameter of a projection lens in the projection device and an optical formula, or may be determined through experimental measurement. The manner of determining the depth of field may not be limited in the embodiments of the present disclosure.

At block S830, the focus lens group may be controlled to move along a direction from the reference focus position toward the initial focus position, and the target focus position may be determined.

The target focus position may be a position where a corresponding projected image frame has the maximum clarity in a case where the focus lens group is located at the position.

In some embodiments, the target focus position may be any position between the initial focus position and the reference focus position. Projected image frames corresponding to different positions may be continuously obtained in a process of controlling the focus lens group to move along the direction from the reference focus position toward the initial focus position. The target focus position may be determined based on multiple projected image frames.

In the embodiments of the present disclosure, the initial focus position corresponding to the target throw ratio may be determined based on the target throw ratio and the focus mapping relationship. The reference focus position configured to obtain the projected image frame may be determined based on the initial focus position. The focus lens group may be controlled to move along the direction from the reference focus position toward the initial focus position, and the target focus position may be determined. In the above method, the reference focus position may be determined based on the initial focus position, and the projected image frames may be continuously obtained starting from the reference focus position. The target focus position may be determined based on the clarity of multiple projected image frames, thereby improving the precision of focus control.

The target focus position may be determined based on multiple projected image frames obtained at different positions. Therefore, in some embodiments, as shown in FIG. 9, the operation of controlling the focus lens group to move along the direction from the reference focus position toward the initial focus position and determining the target focus position in block S830 may include operations executed by the following blocks.

At block S910, the focus lens group may be driven to move along the direction from the reference focus position toward the initial focus position via the focus driving mechanism associated with the focus lens group, and multiple projected image frames may be obtained at different positions.

In some embodiments, the focus driving mechanism associated with the focus lens group may be the focus motor. The projection device may drive the focus lens group to move by adjusting the step count of the focus motor.

It may be understood that since the magnetic encoder data of the reference focus position is greater than the magnetic encoder data of the initial focus position, in a case where the focus lens group moves along the direction from the reference focus position toward the initial focus position, a movement direction of the focus motor may be opposite to a previous movement direction. In a case where the focus motor moves in the reverse direction, due to the structural gap error of the focus motor, a portion of the stroke may fail to actually drive the focus lens group to move, which is called the idle stroke phenomenon. Within the idle stroke, the position of the focus lens group may not change in a case where the focus motor moves.

In some embodiments, the projection device may adjust the step count of the focus motor and obtain a projected image frame in a case where the step count of the focus motor changes.

In some embodiments, the projection device may obtain one projected image frame each time the focus motor moves a preset step count along the current movement direction. For example, the preset step count may be 8. In this way, in a case where the focus lens group moves along the direction from the reference focus position toward the initial focus position, multiple projected image frames at different positions may be obtained.

At block S920, a position corresponding to an image with the maximum clarity among the multiple projected image frames may be determined as the target focus position.

In some embodiments, each time one projected image frame is obtained, the projection device may determine the clarity of the projected image frame based on a preset image clarity detection algorithm. The clarity of the projected image frame may be recorded and a position corresponding to the projected image frame may be obtained.

In some embodiments, the preset image clarity detection algorithm may include a gradient-based algorithm, a histogram-based algorithm, a wavelet transform-based algorithm, etc. The imaging quality of the projected image may also be adjusted through a transfer function, which may not be limited in the present disclosure.

In some embodiments, the projection device may control the focus lens group to move from the reference focus position to the initial focus position, and determine the image with the maximum clarity among the multiple projected image frames obtained during the movement.

In some embodiments, an image quality curve of the projection image quality varying during the movement of the focus motor may be determined based on the multiple projected image frames. A peak point (corresponding to the maximum clarity) of the image quality curve may be determined. An abscissa position corresponding to the peak point may be determined as the target focus position.

In some embodiments, values of the image quality curve may be compared to determine a maximum value point. The target focus position may be determined based on an abscissa position corresponding to the maximum value point.

In some embodiments, the projection device may control the focus lens group to move along the direction from the reference focus position toward the initial focus position. Each time one projected image frame is obtained, the clarity of a current projected image frame may be compared with the clarity of other recorded projected image frames. The target focus position may be determined based on changes in clarity. After the target focus position is determined, the projection device may not need to control the focus lens group to move along the direction toward the initial focus position any more.

In some embodiments, during the movement of the focus lens group, in a case where the clarity of multiple consecutive projected image frames obtained after one projected image frame is less than the clarity of the one projected image frame, the one projected image frame may be determined as a target projected image frame. A position corresponding to the target projected image frame may be the target focus position.

In the embodiments of the present disclosure, the focus lens group may be driven to move along the direction from the reference focus position toward the initial focus position via the focus driving mechanism associated with the focus lens group. Multiple projected image frames may be obtained at different positions. The position corresponding to the image with the maximum clarity among the multiple projected image frames may be determined as the target focus position. In the above method, the projection device may control the focus lens group to move along the direction from the reference focus position toward the initial focus position, and determine the target focus position based on the clarity of the projected image frames. A position of the focus lens group in a case where the projected image frame has the maximum clarity may be obtained, thereby making the obtained target focus position more accurate and improving the precision of focus control.

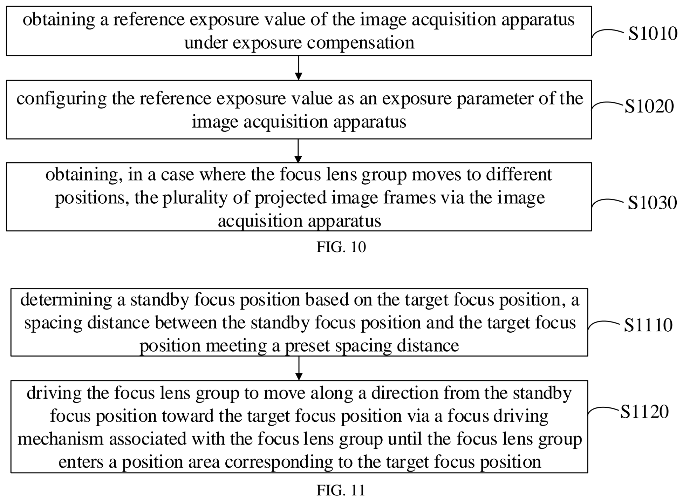

The projection device may further include an image acquisition apparatus. In some embodiments, as shown in FIG. 10, the operation of obtaining multiple projected image frames at different positions in block S910 may include operations executed by the following blocks.

At block S1010, a reference exposure value of the image acquisition apparatus under exposure compensation may be obtained.

An exposure value may be data configured to measure an exposure degree of the image acquisition apparatus. The reference exposure value may function as a standard exposure value to enable the image acquisition apparatus to obtain multiple projected image frames under the reference exposure value.

In some embodiments, the reference exposure value may be a value pre-stored in the storage medium of the projection device based on an empirical value. The reference exposure value may be obtained by querying the storage medium.

In some embodiments, before starting to obtain the projected image frames, the image acquisition apparatus may obtain multiple frames of initial projected image frames, so that the image acquisition apparatus may automatically adjust the exposure value based on ambient brightness. The adjusted exposure value may function as the reference exposure value.

At block S1020, the reference exposure value may be configured as an exposure parameter of the image acquisition apparatus.

In some embodiments, the projection device may configure the image acquisition apparatus based on the obtained reference exposure value. The exposure parameter of the image acquisition apparatus may be set as the reference exposure value.

In some embodiments, the projection device may send a configuration instruction to the image acquisition apparatus. The configuration instruction may include the reference exposure value. The configuration instruction may be configured to instruct to configure the exposure parameter as the reference exposure value. Alternatively, the projection device may call a configuration interface of the image acquisition apparatus, interact with the image acquisition apparatus through the configuration interface, and configure the exposure parameter. The configuration process may not be limited in the embodiments of the present disclosure.

At block S1030, in a case where the focus lens group moves to different positions, multiple projected image frames may be obtained via the image acquisition apparatus.

In some embodiments, in a case where the focus lens group moves to different positions, the projection device may obtain projected image frames corresponding to each position respectively via the image acquisition apparatus.

In some embodiments, the projection device may issue an image acquisition instruction to the image acquisition apparatus. In a case where the image acquisition apparatus obtains a projected image frame, an image upload instruction may be issued to the image acquisition apparatus, so that multiple projected image frames corresponding to the focus lens group at different positions may be obtained via the image acquisition apparatus.

In the embodiments of the present disclosure, the reference exposure value of the image acquisition apparatus under exposure compensation may be obtained. The reference exposure value may be configured as the exposure parameter of the image acquisition apparatus. Multiple projected image frames may be obtained via the image acquisition apparatus in a case where the focus lens group moves to different positions. In the above method, the multiple projected image frames obtained by the projection device may be multiple projected image frames obtained by the image acquisition apparatus under the same reference exposure value, which may reduce interference caused by brightness differences and enable comparison among the multiple projected image frames more effectively. In this way, the image with the maximum clarity may be accurately determined from the multiple projected image frames, thereby improving the precision of focus control.

In order to control the projection device to reach the target focus position, in some embodiments, as shown in FIG. 11, the operation of controlling the focus lens group of the projection device to reach the target focus position in S230 may include operations executed by the following blocks.

At block S1110, a standby focus position may be determined based on the target focus position. A spacing distance between the standby focus position and the target focus position may meet the preset spacing distance.

Magnetic encoder data of the standby focus position may be greater than magnetic encoder data of the target focus position.

In some embodiments, after the target focus position is determined, the projection device may determine the standby focus position based on the target focus position and the preset spacing distance. A focus lens group may be controlled to move to the standby focus position.

In some embodiments, the preset spacing distance may be twice the motor stroke corresponding to the depth of field.

At block S1120, the focus lens group may be driven to move along a direction from the standby focus position toward the target focus position via the focus driving mechanism associated with the focus lens group until the focus lens group enters a position area corresponding to the target focus position.

The position area corresponding to the target focus position may be a position range including the target focus position.

In some embodiments, the focus driving mechanism associated with the focus lens group may be the focus motor. The projection device may drive the focus lens group to move by adjusting the step count of the focus motor.

In some embodiments, the focus lens group may be driven to move along the direction from the standby focus position toward the target focus position via the focus driving mechanism associated with the focus lens group. The focus movement direction of the focus driving mechanism may be determined based on the standby focus position and the target focus position. The focus driving mechanism may be controlled to move along the focus movement direction, and the focus lens group may be driven to move toward the position area corresponding to the target focus position.

In some embodiments, the projection device may determine whether the target focus position is located on a side of the standby focus position close to the movement starting point of the focus lens group or on a side of the standby focus position close to the movement ending point of the focus lens group based on the standby focus position of the focus lens group, so as to determine a movement direction of the focus driving mechanism as the focus movement direction.

In some embodiments, in a case where the target focus position is located on the side of the standby focus position close to the movement starting point, the projection device may determine that the focus movement direction is a positive movement direction, such as a clockwise movement direction of the focus motor. In a case where the target focus position is located on the side of the standby focus position close to the movement ending point, the projection device may determine that the focus movement direction is a negative movement direction, such as a counterclockwise movement direction of the focus motor.

In some embodiments, after the focus movement direction is obtained, the projection device may control the focus driving mechanism to move along the focus movement direction, so that under the movement of the focus driving mechanism, the focus lens group may be driven to move toward the position area corresponding to the target focus position.

In the embodiments of the present disclosure, the standby focus position may be determined based on the target focus position. The spacing distance between the standby focus position and the target focus position may meet the preset spacing distance. The focus lens group may be driven to move along the direction from the standby focus position toward the target focus position via the focus driving mechanism associated with the focus lens group until the focus lens group enters the position area corresponding to the target focus position. In the above method, in a case where the projection device determines the target focus position, the focus lens group may have passed and left the target focus position, and a focus movement direction of the focus lens group may be opposite to a current movement direction. In a case where the focus lens group is controlled to move along a reverse direction directly to the target focus position, the idle stroke phenomenon of the focus motor may affect the effect of focus control. Therefore, the focus lens group may be moved from the current position to the standby focus position farther away, and then start to move from the standby focus position to the target focus position. Since a distance between the standby focus position and the target focus position is relatively large, the idle stroke may be eliminated during the movement of the focus motor, thereby reaching the target focus position accurately.

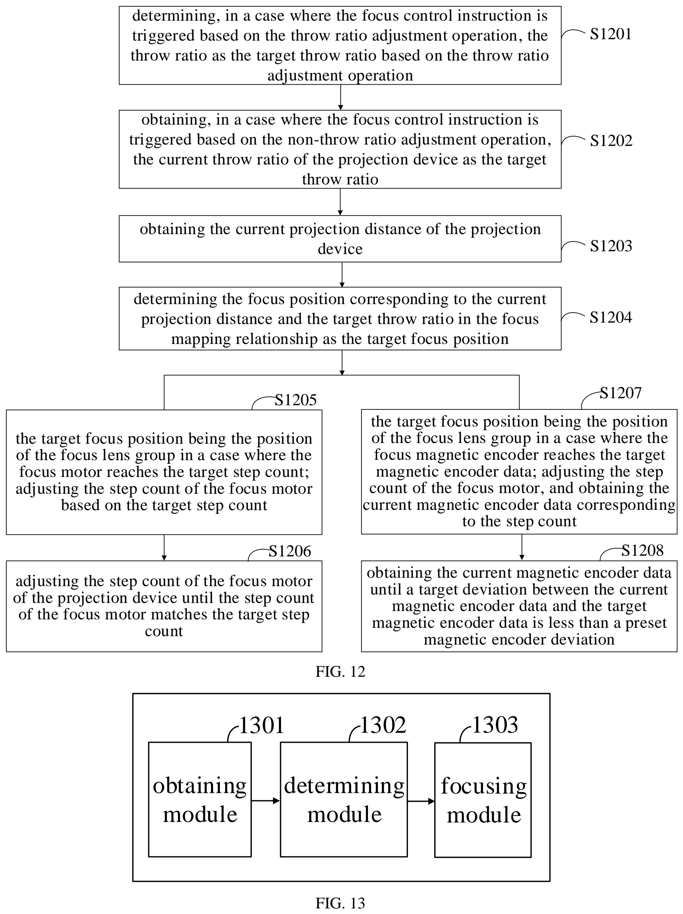

For the convenience of understanding by those skilled in the art, the focus control method for the projection device provided by the embodiments of the present disclosure may be described in detail below. As shown in FIG. 12, the method may include operations executed by the following blocks.

At block S1201, in a case where the focus control instruction is triggered based on the throw ratio adjustment operation, the throw ratio may be determined as the target throw ratio based on the throw ratio adjustment operation.

At block S1202, in a case where the focus control instruction is triggered based on the non-throw ratio adjustment operation, the current throw ratio of the projection device may be obtained as the target throw ratio.

At block S1203, the current projection distance of the projection device may be obtained.

At block S1204, the focus position corresponding to the current projection distance and the target throw ratio may be determined in the focus mapping relationship as the target focus position.

The focus mapping relationship may be configured to represent the corresponding relationship between throw ratios and focus positions.

At block S1205, the target focus position may be the position of the focus lens group in a case where the focus motor reaches the target step count, and the step count of the focus motor may be adjusted based on the target step count.

At block S1206, the step count of the focus motor of the projection device may be adjusted until the step count of the focus motor matches the target step count.

At block S1207, the target focus position may be the position of the focus lens group in a case where the focus magnetic encoder reaches the target magnetic encoder data, the step count of the focus motor may be adjusted, and the current magnetic encoder data corresponding to the step count may be obtained.

At block S1208, the current magnetic encoder data may be obtained until a target deviation between the current magnetic encoder data and the target magnetic encoder data is less than a preset magnetic encoder deviation.

It should be noted that for the descriptions of block S 1201 to block S 1208 may refer to the relevant descriptions in the above embodiments and achieve similar effects, which may not be repeated in the embodiments.

It should be understood that although the various operations in the flowcharts involved in the above embodiments are displayed in sequence as indicated by arrows, the operations may not necessarily be executed in order indicated by the arrows. Unless explicitly stated herein, there may be no strict order restriction on the execution of the operations. The operations may be executed in other orders. Moreover, at least some of the operations in the flowcharts in the above embodiments may include multiple sub-operations or multiple stages. The sub-operations or stages may not necessarily be executed simultaneously but may be executed at different times. An execution order of the sub-operations or stages may not necessarily be sequential but may be executed alternately or in turn with other operations or at least a portion of the sub-operations or stages in other operations.

Based on the same inventive concept, the embodiments of the present disclosure may further provide a focus control apparatus of the projection device configured to implement the above-mentioned focus control method for the projection device. The implementation solutions for solving the problems provided by the apparatus may be similar to the implementation solutions described in the above methods. Therefore, limitations in one or more embodiments of the focus control apparatus of the projection device provided below may refer to the limitations on the focus control method for the projection device above, and details may not be repeated here.

In some embodiments, as shown in FIG. 13, the focus control apparatus of the projection device may be provided. The focus control apparatus may include an obtaining module 1301, a determining module 1302, and a focusing module 1303.

The obtaining module 1301 may be configured to obtain the target throw ratio of the projection device in response to the focus control instruction.

The determining module 1302 may be configured to determine the target focus position corresponding to the target throw ratio in the preset focus mapping relationship based on the target throw ratio. The focus mapping relationship may be configured to represent the corresponding relationship between throw ratios and focus positions.

The focusing module 1303 may be configured to perform focusing on the projection device based on the target focus position and to control the projection device to reach the target focus position.

Each module in the focus control apparatus of the projection device may be implemented in whole or in part by software, hardware, or a combination thereof. The modules may be embedded in or independent of a processor in a computer device in the form of hardware, or stored in a memory in the computer device in the form of software, so that the processor may call and execute corresponding operations of the modules.

In some embodiments, the projection device may be provided. The projection device may include the optical engine, the distance sensor, the focus motor, and the focus magnetic encoder. The optical engine may include the focus lens group configured to perform focusing on a projected image. The distance sensor may be configured to detect the projection distance of the projection device. The focus magnetic encoder may be connected to the focus lens group and may be configured to detect the position of the focus lens group. The optical engine may further include the memory and the processor. The memory may be configured to store a computer program. The processor may be configured to execute the computer program to implement the operations in any of the above embodiments of the focus control method for the projection device.

In some embodiments, a computer-readable storage medium may be provided. The computer-readable storage medium may be configured to store a computer program. The computer program may be configured to be executed by a processor to implement the operations in any of the above embodiments of the focus control method for the projection device.

In some embodiments, a computer program product may be provided. The computer program product may include a computer program. The computer program may be configured to be executed by a processor to implement the operations in any of the above embodiments of the focus control method for the projection device.

Those of ordinary skill in the art may understand that all of or a portion of the processes in the methods of the above embodiments may be implemented by instructing relevant hardware via a computer program. The computer program may be stored in a non-volatile computer-readable storage medium. In a case where the computer program is executed, the computer program may include the processes of the method embodiments described above. Any reference to memory, database, or other medium in the various embodiments provided in the present disclosure may include at least one of a non-volatile memory and a volatile memory. The non-volatile memory may include read-only memory (ROM), magnetic tape, floppy disk, flash memory, optical memory, high-density embedded non-volatile memory, resistive random access memory (ReRAM), magnetoresistive random access memory (MRAM), ferroelectric random access memory (FRAM), phase change memory (PCM), graphene memory, etc. The volatile memory may include random access memory (RAM) or external cache memory, etc. For illustration but not limitation, the RAM may be in various forms, such as static random access memory (SRAM) or dynamic random access memory (DRAM). The database involved in the various embodiments provided in the present disclosure may include at least one of a relational database and a non-relational database. The non-relational database may include a blockchain-based distributed database, etc., which may not be limited thereto. The processor involved in the various embodiments provided in the present disclosure may be a general-purpose processor, central processing unit, graphics processor, digital signal processor, programmable logic device, quantum computing-based data processing logic device, etc., which may not be limited thereto.

The technical features of the above embodiments may be combined arbitrarily. To make the description concise, all possible combinations of the technical features in the above embodiments may not be described. However, as long as there is no contradiction in the combinations of the technical features, all of the combinations should be considered as the scope of the present disclosure.

The above-described embodiments may only represent several implementation manners of the present disclosure, and the descriptions thereof may be relatively specific and detailed, but the embodiments should not be construed as limiting the scope of the patent of the present disclosure. It should be noted that for those of ordinary skill in the art, several modifications and improvements may be made without departing from the concept of the present disclosure, and these may all fall within the protection scope of the present disclosure. Therefore, the protection scope of the present disclosure should be subject to the appended claims.

## Claims

1. A focus control method for a projection device, comprising:
obtaining (S210), in response to a focus control instruction, a target throw ratio of the projection device;
determining (S220) a target focus position corresponding to the target throw ratio in a preset focus mapping relationship based on the target throw ratio, the focus mapping relationship being configured to represent a corresponding relationship between throw ratios and focus positions;
performing (S230) focusing on the projection device based on the target focus position, and controlling a focus lens group of the projection device to reach the target focus position.

2. The method according to claim 1, wherein obtaining the target throw ratio of the projection device, comprises:
determining (S410), in a case where the focus control instruction is triggered based on a throw ratio adjustment operation, a throw ratio as the target throw ratio based on the throw ratio adjustment operation.

3. The method according to claim 1, wherein obtaining the target throw ratio of the projection device, comprises:
obtaining (S420), in a case where the focus control instruction is triggered based on a non-throw ratio adjustment operation, a current throw ratio of the projection device as the target throw ratio.

4. The method according to any one of claims 1 to 3, wherein the projection device comprises the focus lens group and a focus driving mechanism associated with the focus lens group; controlling the focus lens group of the projection device to reach the target focus position, comprises:
determining (S510) a focus movement direction of the focus driving mechanism based on a current position of the focus lens group and the target focus position;
controlling (S520) the focus driving mechanism to move along the focus movement direction, and driving the focus lens group to move toward the target focus position until the focus lens group reaches the target focus position.

5. The method according to claim 4, wherein the focus driving mechanism comprises a focus motor, and the target focus position is a position of the focus lens group in a case where the focus motor reaches a target step count; controlling the focus lens group of the projection device to reach the target focus position, comprises:
adjusting (S610) a step count of the focus motor based on the target step count;
adjusting (S620) the step count of the focus motor until the step count of the focus motor of the projection device matches the target step count.

6. The method according to claim 5, wherein the projection device further comprises a focus magnetic encoder connected to the focus lens group, and the target focus position is a position of the focus lens group in a case where the focus magnetic encoder reaches target magnetic encoder data; controlling the focus lens group of the projection device to reach the target focus position, comprises:
adjusting (S710) the step count of the focus motor, and obtaining current magnetic encoder data corresponding to the step count, the focus motor being configured to drive the focus magnetic encoder to move;
obtaining (S720) the current magnetic encoder data until a target deviation between the current magnetic encoder data and the target magnetic encoder data is less than a preset magnetic encoder deviation.

7. The method according to claim 5, wherein the projection device further comprises a magnetic field generator connected to the focus lens group, and the target focus position is a position of the focus lens group in a case where the magnetic field generator reaches target magnetic encoder data; controlling the focus lens group of the projection device to reach the target focus position, comprises:
adjusting the step count of the focus motor, and obtaining current magnetic encoder data corresponding to the step count, the focus motor being configured to drive the magnetic field generator to move;
obtaining the current magnetic encoder data until a target deviation between the current magnetic encoder data and the target magnetic encoder data is less than a preset magnetic encoder deviation.

8. The method according to any one of claims 1 to 3, wherein the projection device comprises the focus lens group, and determining the target focus position corresponding to the target throw ratio in the preset focus mapping relationship based on the target throw ratio, comprises:
determining (S810) an initial focus position corresponding to the target throw ratio based on the target throw ratio and the focus mapping relationship;
determining (S820) a reference focus position configured to obtain a projected image frame based on the initial focus position;
controlling (S830) the focus lens group to move along a direction from the reference focus position toward the initial focus position, and determining the target focus position.

9. The method according to claim 8, wherein controlling the focus lens group to move along the direction from the reference focus position toward the initial focus position, and determining the target focus position, comprises:
driving (S910) the focus lens group to move along the direction from the reference focus position toward the initial focus position via a focus driving mechanism associated with the focus lens group, and obtaining a plurality of projected image frames at different positions;
determining (S920) a position corresponding to an image with a maximum clarity among the plurality of projected image frames as the target focus position.

10. The method according to claim 9, wherein the projection device further comprises an image acquisition apparatus, and obtaining the plurality of projected image frames at different positions, comprises:
obtaining (S1010) a reference exposure value of the image acquisition apparatus under exposure compensation;
configuring (S1020) the reference exposure value as an exposure parameter of the image acquisition apparatus;
obtaining (S1030), in a case where the focus lens group moves to different positions, the plurality of projected image frames via the image acquisition apparatus.

11. The method according to claim 8, wherein controlling the focus lens group of the projection device to reach the target focus position, comprises:
determining (S1110) a standby focus position based on the target focus position, a spacing distance between the standby focus position and the target focus position meeting a preset spacing distance;
driving (S1120) the focus lens group to move along a direction from the standby focus position toward the target focus position via a focus driving mechanism associated with the focus lens group until the focus lens group enters a position area corresponding to the target focus position.

12. The method according to claim 1, wherein the target throw ratio ranges from 0.9 to 1.5.

13. The method according to claim 1, wherein the method further comprises:
obtaining the focus mapping relationship based on simulation of an optical simulation model corresponding to the projection device; or
obtaining the focus mapping relationship based on calibration.

14. The method according to claim 4, wherein determining the focus movement direction of the focus driving mechanism based on the current position of the focus lens group and the target focus position, comprises:
determining, in a case where the target focus position is located on a side of the current position close to a movement starting point, that the focus movement direction is a positive movement direction;
determining, in a case where the target focus position is located on a side of the current position close to a movement ending point, that the focus movement direction is a negative movement direction.

15. A projection device (101), comprising:
an optical engine (102), comprising a focus lens group configured to perform focusing on a projected image;
a distance sensor (103), configured to detect a projection distance;
a focus motor (104); and
a focus magnetic encoder (105), connected to the focus lens group and configured to detect a position of the focus lens group;
wherein the optical engine (102) further comprises a memory and a processor, the memory is configured to store a computer program, and the processor is configured to execute the computer program to implement operations of the method according to any one of claims 1 to 14.
